# EUROPÄISCHE PATENTSCHRIFT

(11) **EP 3 721 025 B1**
(45) Veröffentlichungstag und Bekanntmachung des Hinweises auf die Patenterteilung: **07.06.2023**
(21) Anmeldenummer: 18815971.9
(22) Anmeldetag: 30.11.2018
(51) Int. Cl.: E04B 7/14, E04H 15/20, F16K 31/08, E04G 21/28

(54) **GEBÄUDEUMHÜLLUNGSELEMENT MIT EINER VORRICHTUNG ZUM ABLEITEN EINER FLÜSSIGKEIT**
BUILDING CLADDING ELEMENT COMPRISING A DEVICE FOR DRAINING A LIQUID
ÉLÉMENT D'ENVELOPPE DE BÂTIMENT POURVU D'UN DISPOSITIF POUR ÉVACUER UN LIQUIDE

(30) Priorität: 06.12.2017 DE 102017129059
(43) Veröffentlichungstag der Anmeldung: 14.10.2020
(73) Patentinhaber: Vector Foiltec GmbH, 28717 Bremen (DE)
(72) Erfinder: SCHEIDIG, Florian, 20144 Hamburg (DE); MAYWALD, Carl, 28357 Bremen (DE)
(74) Vertreter: Eisenführ Speiser
(86) Internationale Anmeldenummer: PCT/EP2018/083203
(87) Internationale Veröffentlichungsnummer: WO 2019/110449

(56) Entgegenhaltungen:
- EP-A2- 3 246 483
- CN-A- 104 631 905
- DE-U1- 20 219 287
- JP-A- S5 924 070
- US-A1- 2007 267 069
- US-A1- 2008 135 187

## Beschreibung

Die Erfindung betrifft ein Gebäudeumhüllungselement mit einem Folienkissen, das mindestens eine obere Folienlage und eine untere Folienlage aufweist, wobei zwischen der oberen Folienlage und der unteren Folienlage mindestens ein im Wesentlichen fluiddicht geschlossener Hohlraum gebildet ist, in dem ein fluides Medium, insbesondere Luft, enthalten ist, und das fluide Medium in dem Hohlraum mit einem Druck beaufschlagbar ist.

Gebäudeumhüllungselemente der zuvor genannten Art werden in Foliendachsystemen und auch Folienfassadensystemen eingesetzt. Als Anwendungsbereich kommen insbesondere große gewerbliche Bauten, wie beispielsweise Sportstadien, Veranstaltungszentren oder Einkaufszentren in Betracht. Die mit Foliendachsystemen verbundenen Vorteile, wie insbesondere Leichtigkeit, Lichtdurchlässigkeit, Anpassbarkeit der Wärmedurchlässigkeit und/oder Gestaltbarkeit der Farbgebung, kommen bei diesen großen Dachflächen besonders zur Geltung.

Die Anmelderin entwickelt, stellt her und vertreibt Gebäudeumhüllungselemente der zuvor genannten Art. Gewöhnlich bestehen die Gebäudeumhüllungselemente aus Folienkissen oder sind aus diesen zusammengesetzt, wobei die Folienkissen aus einer Anordnung von mindestens zwei abschnittsweise voneinander beabstandeten Folienlagen gebildet sind. Die beiden Folienlagen der Folienkissen sind entlang ihrer Ränder miteinander verschweißt oder anderweitig fluiddicht miteinander verbunden und bilden zwischen sich zumindest einen im Wesentlichen fluiddicht geschlossenen Hohlraum. Die Folienkissen sind entlang der Ränder der beiden Folienlagen an einer Struktur befestigt. Ferner ist eine Druckluftversorgungseinrichtung vorgesehen, die beispielsweise ein Rohr, einen Kanal und/oder oder einen Schlauch sowie eine daran angeschlossene externe Druckluftquelle aufweist, um die Luft unter Druck in den Hohlraum der Folienkissen einzuleiten. Der in den Folienkissen herrschende Druck ist für deren Funktionsfähigkeit, insbesondere für deren Stabilität, Isolierungswirkung und Widerstandsfähigkeit, von entscheidender Bedeutung. Grundsätzlich ist es auch denkbar, anstelle eines Folienkissens ein einlagiges Foliendachsystem oder Folienfassadensystem mit nur einer einzigen Folienlage zu verwenden, die unter Spannung mit ihren Rändern an der Struktur befestigt ist.

Für den Fall eines unerwarteten Druckverlustes in den Folienkissen verliert die obere bzw. äußere Folienlage ihre nach außen und oben gekrümmte Form und droht stattdessen zu kollabieren, d.h. in sich zusammenzufallen bzw. zusammenzusacken, sodass sie zunächst in eine horizontale Ausrichtung gelangt und anschließend eine nach unten gekrümmte 'durchhängende' Form erhält, wodurch sie dann eine nach oben bzw. außen offene Vertiefung bildet. Das gleiche Problem tritt auch bei einem einlagigen Foliendachsystem oder Folienfassadensystem auf, wenn die Spannung in der verwendeten einzigen Folienlage deutlich abnimmt oder gar völlig verschwindet. In beiden Fällen bildet dann die hier in Rede stehende kollabierte Folienlage eine wannenförmige Vertiefung, in der sich nun Regenwasser sammeln kann. Mit zunehmendem Zufluss von Regenwasser erhöht sich das Gewicht des an der Oberseite der Folienlage gesammelten Wassers, was dann aufgrund der Dehnungsfähigkeit der Folienlage dazu führt, dass die wannenförmige Vertiefung in der kollabierten Folienlage sich vergrößert und weiter nach unten sackt, bis aufgrund einer durch die Zunahme der Flüssigkeit verursachten Überlast die Folienlage reißt oder die die Folienlage halternde Haltestruktur beschädigt wird.

Um das zuvor beschriebene Szenario zu vermeiden, gibt es bereits verschiedene Denkansätze.

Ein Denkansatz besteht darin, die Folienlage in einer geneigten Ausrichtung anzuordnen, sodass das Wasser entsprechend abfließen kann. Eine solche geneigte Anordnung wird jedoch nicht jedem Einsatzzweck und jeder baulichen Gegebenheit gerecht und führt deshalb zu unnötigen Einschränkungen.

Ein weiterer Denkansatz besteht darin, die Folienlage unter deutlich stärkere Spannung als bisher zu setzen oder Folien mit deutlich geringerem Dehnungsverhalten zu verwenden. Es hat sich jedoch herausgestellt, dass auch derartigen Maßnahmen sehr enge Grenzen gesetzt sind, sodass eine zuverlässige Ableitung von Regenwasser auch in dem zuvor beschriebenen Szenario nicht immer gewährleistet werden kann.

Ein weiterer Denkansatz besteht in der Verwendung von besonderen Überwachungssystemen, mit denen der Zustand der Folienlage und/oder im Falle der Verwendung von Folienkissen die Druckerzeugung bzw. der Druckabfall überwacht wird, wobei im Fehlerfalle ein entsprechendes Alarmsignal erzeugt wird. Abgesehen davon, dass es sich hierbei um eine indirekte Maßnahme handelt, die im Fehlerfall weitere direkte Maßnahmen zur eigentlichen Beseitigung des Regenwassers nach sich zieht, ist grundsätzlich das Risiko nicht völlig auszuschließen, dass auch in einem solchen Überwachungssystem eine Fehlfunktion oder gar ein vollständiger Ausfall auftreten kann, wodurch ein Fehler nicht erkannt wird.

Schließlich besteht ein weiterer Denkansatz darin, einen oder mehrere Drainageschläuche vorzusehen. Abgesehen davon, dass sowohl die Montage als auch insbesondere im Falle von Folienkissen die Führung derartiger Schläuche kompliziert ist, besteht die Gefahr, dass durch das Absenken der kollabierten Folienlage die Schläuche knicken und somit die weitere Ableitung von Regenwasser blockieren.

Aus der DE 202 19 287 U1 ist bereits ein Gebäudeumhüllungselement mit einem Folienkissen, das mindestens eine obere Folienlage und eine untere Folienlage aufweist, wobei zwischen der oberen Folienlage und der unteren Folienlage mindestens ein im Wesentlichen fluiddicht geschlossener Hohlraum gebildet ist, in dem ein fluides Medium, insbesondere Luft, enthalten ist, das fluide Medium in dem Hohlraum mit einem Druck beaufschlagbar ist und in der oberen Folienlage ein oberes erstes Ventil und in der unteren Folienlage ein unteres zweites Ventil vorgesehen ist und beide Ventile zur Ableitung von sich auf einer Oberseite der jeweiligen Folienlage gesammelter Flüssigkeit, insbesondere Regenwasser, dienen. Das obere erste Ventil weist ein erstes Ventilelement auf, das im Bereich einer in der oberen Folienlage vorgesehenen ersten Öffnung derart anordenbar ist, dass es sich zwischen einer die erste Öffnung verschließenden ersten Stellung und einer die erste Öffnung zumindest teilweise freigebenden zweiten Stellung betätigbar ist, und an der oberen Folienlage anbringbare erste Öffnungs- und Schließmittel aufweist. Das untere zweite Ventil weist ein zweites Ventilelement auf, das im Bereich einer in der unteren Folienlage vorgesehenen zweiten Öffnung derart anordenbar ist, dass es sich zwischen einer die zweite Öffnung verschließenden ersten Stellung und einer die zweite Öffnung zumindest teilweise freigebenden zweiten Stellung betätigbar ist und an der unteren Folienlage anbringbare zweite Öffnungs- und Schließmittel aufweist.

Die US 2007/0267069 A1 offenbart ein Rückschlagventil, das zum Einbau in sanitäre Installationen insbesondere für Schwimmbäder und Wellnessbereiche vorgesehen ist, welche über eine Verzweigung in zwei Flüssigkeitszweige bzw. -leitungen verfügen, wobei mindestens in einer der beiden Flüssigkeitszweige bzw. -leitungen durch das Rückschlagventil ein Rückfluss des Wassers vermieden werden soll.

Aus der US 2008/0135187 A1 ist eine Markise bekannt, die zur Ableitung von Regenwasser mindestens eine Öffnung aufweist, welche von einer Art Folienventil verschlossen wird.

Die JPS 5924070 A befasst sich mit einer Gebäudestruktur, in der auch einlagige Folien verbaut sind, wobei Schläuche von einer oberen Folie zum Boden dieser Struktur führen, um Regenwasser abzuleiten.

Es ist eine Aufgabe der vorliegenden Erfindung, konstruktive Maßnahmen vorzuschlagen, die ein sicheres Ableiten von Flüssigkeit, insbesondere Regenwasser, gewährleisten.

Gelöst wird diese Aufgabe durch ein Gebäudeumhüllungselement nach Anspruch 1, mit einem Folienkissen, das mindestens eine obere Folienlage und eine untere Folienlage aufweist, wobei zwischen der oberen Folienlage und der unteren Folienlage mindestens ein im Wesentlichen fluiddicht geschlossener Hohlraum gebildet ist, in dem ein fluides Medium, insbesondere Luft, enthalten ist, das fluide Medium in dem Hohlraum mit einem Druck beaufschlagbar ist, in der oberen Folienlage ein oberes erstes Ventil und in der unteren Folienlage ein unteres zweites Ventil vorgesehen ist und beide Ventile zur Ableitung von sich auf einer Oberseite der jeweiligen Folienlage gesammelter Flüssigkeit, insbesondere Regenwasser, dienen,
wobei
das obere erste Ventil
   - ein erstes Ventilelement, das im Bereich einer in der oberen Folienlage vorgesehenen ersten Öffnung derart anordenbar ist, dass es zwischen einer die erste Öffnung verschließenden ersten Stellung und einer die erste Öffnung zumindest teilweise freigebenden zweiten Stellung verschwenkbar ist, und
   - an der oberen Folienlage anbringbare erste Öffnungs- und Schließmittel, die ausgebildet sind, das erste Ventilelement in der ersten Stellung zu halten, solange der das erste Ventilelement beaufschlagende Druck einer auf die Oberseite der oberen Folienlage gelangten Flüssigkeit kleiner als ein vorbestimmter erster Schwellwert oder höchstens gleich diesem Schwellwert ist, ein Verschwenken des ersten Ventilelements von der ersten Stellung in die zweite Stellung zu ermöglichen, wenn der das erste Ventilelement beaufschlagende Druck der Flüssigkeit den ersten Schwellwert übersteigt, und das erste Ventilelement von der zweiten Stellung in die erste Stellung zu verschwenken, nachdem der das erste Ventilelement beaufschlagende Druck der Flüssigkeit im Wesentlichen nicht mehr vorhanden ist,
aufweist und
das untere zweite Ventil
   - ein zweites Ventilelement, das im Bereich einer in der unteren Folienlage vorgesehenen zweiten Öffnung derart anordenbar ist, dass es zwischen einer die zweite Öffnung verschließenden ersten Stellung und einer die zweite Öffnung zumindest teilweise freigebenden zweiten Stellung verschwenkbar ist, und
   - an der unteren Folienlage anbringbare zweite Öffnungs- und Schließmittel, die ausgebildet sind, das zweite Ventilelement in der ersten Stellung zu halten, solange der das zweite Ventilelement beaufschlagende Druck einer auf die Oberseite der unteren Folienlage gelangten Flüssigkeit kleiner als ein vorbestimmter zweiter Schwellwert oder höchstens gleich diesem Schwellwert ist, ein Verschwenken des zweiten Ventilelements von der ersten Stellung in die zweite Stellung zu ermöglichen, wenn der das zweite Ventilelement beaufschlagende Druck der Flüssigkeit den zweiten Schwellwert übersteigt, und das zweite Ventilelement von der zweiten Stellung in die erste Stellung zu verschwenken, nachdem der das zweite Ventilelement beaufschlagende Druck der Flüssigkeit im Wesentlichen nicht mehr vorhanden ist,
aufweist,
wobei das untere zweite Ventil gegenüber dem oberen ersten Ventil seitlich versetzt angeordnet ist und
wobei das untere zweite Ventil in einem ersten Fall, wonach die obere Folienlage teilweise kollabiert und sich das obere erste Ventil öffnet, wodurch die Flüssigkeit auf die untere Folienlage abgeleitet wird, öffnet und somit die Flüssigkeit nach außen ableitet, bis das kollabierte Folienkissen im Wesentlichen vollständig von Flüssigkeit befreit ist, und in einem zweiten Fall, wonach die obere Folienlage reißt und dadurch das obere erste Ventil wirkungslos wird, wenn der das zweite Ventilelement beaufschlagende Druck der Flüssigkeit den zweiten Schwellwert übersteigt, öffnet, um die Flüssigkeit nach unten mittels Schwerkraft abzuteilen.

Die Erfindung gewährleistet auf konstruktiv einfache, jedoch effektive Weise ein sicheres Ableiten von Flüssigkeit, insbesondere Regenwasser, von einer Folienlage, bevorzugt, wenn diese kollabiert. Dies wird erfindungsgemäß durch die Verwendung eines Ventils erreicht, dessen Ventilelement im normalen Betriebszustand die zugehörige Öffnung in der Folienlage verschließt und lediglich durch Windböen verursachten Lasten und im Falle eines Folienkissens auch noch dem Kisseninnendruck standhalten muss. Des Weiteren sind das Ventilelement und die Öffnungs- und Schließmittel erfindungsgemäß so ausgebildet, dass das Ventil einer Wassersäule bis zu einer definierten Höhe, die den genannten Schwellwert bildet, ebenfalls im geschlossenen Zustand standhalten kann. Übersteigt die Wassersäule die definierte Höhe, so bewirkt die Last der Wassersäule ein Öffnen des Ventils, indem das Ventilelement von der geschlossenen ersten Stellung in die geöffnete zweite Stellung verschwenkt. Der das Ventilelement beaufschlagende Druck der Flüssigkeit führt also sozusagen zu einem automatischen Verschwenken des ersten Ventilelementes von der ersten Stellung in die zweite Stellung, indem die Schwerkraft nicht nur auf das Ventilelement selbst, sondern auch auf die das Ventilelement belastendende Flüssigkeit entsprechend wirkt, wodurch das Ventilelement nach unten gedruckt wird. Durch das dann geöffnete Ventil wird die an der Oberseite der Folienlage insbesondere in deren kollabiertem Zustand gesammelte Flüssigkeit zuverlässig abgeleitet, wodurch die Wassersäule sinkt. Um ein im Wesentlichen vollständiges Ableiten des Wassers zu gewährleisten, schließt das Ventil durch von den erfindungsgemäßen Öffnungs- und Schließmitteln aktiv bewirktes Verschwenken des Bedienelementes von der geöffneten zweiten Stellung zurück in die erste geschlossene Stellung erfindungsgemäß erst dann, wenn im Wesentlichen keine Wassersäule mehr vorhanden ist, wozu die Öffnungsund Schließmittel entsprechend erfindungsgemäß ausgebildet sind, indem sie für die Rückschwenkbewegung nur dem Gewicht des Ventilelementes entgegen zu wirken haben.

Die erfindungsgemäße Konstruktion bietet noch weitere Vorteile. Dadurch, dass erfindungsgemäß das Ventilelement schwenkbar anzuordnen ist, lässt es sich so öffnen, dass dann die Öffnung im Wesentlichen vollständig freiliegt; dadurch lässt sich eine verhältnismäßig hohe Durchflussrate der abzuleitenden Flüssigkeit erzielen, sodass die Ableitung der Flüssigkeit von der betroffenen Folienlage in verhältnismäßig kurzer Zeit stattfinden kann. Weitere Vorteile bestehen in einer deutlich erhöhten Ausfallsicherheit, geringeren Fertigungskosten sowie einem geringeren Wartungsaufwand.

Bei einem Folienkissen kann es im Falle einer Fehlfunktion dazu kommen, dass sich Flüssigkeit, insbesondere Regenwasser, nicht nur auf der Oberseite der oberen Folienlage, sondern zusätzlich oder stattdessen auch auf der Oberseite der unteren Folienlage sammeln kann. Dies ist dann der Fall, wenn die obere Folienlage kollabiert und als Folge dessen das Ventil in der oberen Folienlage öffnet, um die Flüssigkeit abzuleiten. Diese gelangt dann auf die Oberseite der unteren Folienlage. Um diese Flüssigkeit schließlich auch von der unteren Folienlage abzuleiten, sollte bevorzugt die erfindungsgemäße Vorrichtung auch in der unteren Folienlage vorgesehen werden. Dementsprechend sind nicht nur ein erstes Ventilelement und erste Öffnungs- und Schließmittel gemäß der Erfindung an der ersten Folienlage, sondern zusätzlich auch ein zweites Ventilelement und zweite Öffnungs- und Schließmittel gemäß der Erfindung an der zweiten Folienlage vorzusehen. Hierdurch wird mit dieser Ausführung eine vollständige Entfernung von unerwünscht gesammelter Flüssigkeit aus dem Folienkissen gewährleistet.

Weitere bevorzugte Ausführungen und Weiterbildungen der Erfindung sind in den abhängigen Ansprüchen angegeben.

Vorzugsweise ist das Ventilelement als flexible oder elastische Lasche ausgebildet, die mit ihrem einen Ende an der Folienlage befestigbar und mit ihrem anderen Ende gegenüber der Öffnung bewegbar ist und bei einer Weiterbildung zumindest abschnittsweise aus Folienmaterial hergestellt ist, wodurch sich eine besonders einfache Konstruktion realisieren lässt.

Alternativ ist gemäß einer weiteren bevorzugten Ausführung das Ventilelement als Klappe ausgebildet, die mit ihrem einen Ende um ein gegenüber der Folienlage im Wesentlichen ortsfest montierbares Scharnier verschwenkbar und mit ihrem anderen Ende gegenüber der Öffnung bewegbar ist und bei einer Weiterbildung ein im Wesentlichen starres Element bildet. Die Verwendung einer Klappe hat den Vorteil, dass sich die zugehörige Öffnung in der Folienlage besonders effektiv öffnen lässt und in der geöffneten zweiten Stellung des Ventilelementes im Wesentlichen der gesamte Öffnungsquerschnitt der Öffnung freiliegt und für ein schnelles und somit wirksames Ableiten der Flüssigkeit genutzt werden kann.

Bevorzugt weisen die Öffnungs- und Schließmittel Rückstellmittel auf, die eine Rückstellkraft erzeugen, um das Ventilelement von der zweiten Stellung in Richtung auf die erste Stellung zu verschwenken.

Bei einer Weiterbildung dieser Ausführung weisen die Rückstellmittel Federmittel auf, deren Federkraft die Rückstellkraft bildet. Eine konstruktiv besonders einfach zu realisierende Weiterbildung bei Verwendung einer Klappe als Ventilelement besteht darin, dass die Federmittel mindestens eine Spiralfeder aufweisen, die im Bereich des Scharniers oder am Scharnier angeordnet ist.

Die von den Rückstellmitteln erzeugte Rückstellkraft kann so bemessen sein, das Ventilelement in der ersten Stellung zu halten, solange der das Ventilelement beaufschlagende Druck der Flüssigkeit kleiner als der Schwellwert oder höchstens gleich dem Schwellwert ist, sodass bei Überschreiten des Schwellwertes die Rückstellkraft überwunden wird und somit die Rückstellmittel nachgeben, wodurch sich das Ventilelement öffnet und in die zweite Stellung gelangt.

Eine weitere bevorzugte Ausführung der Erfindung zeichnet sich dadurch aus, dass die Öffnungs- und Schließmittel ein an und/oder in der Folienlage anbringbares erstes Magnetelement und ein am und/oder im Ventilelement vorgesehenes zweites Magnetelement aufweisen, wobei die beiden Magnetelemente so ausgebildet und zueinander ausgerichtet sind, dass eine auf die beiden Magnetelemente wirkende Anziehungskraft erzeugt wird. Diese Anziehungskraft bewirkt ein Verschwenken des Ventilelementes in die erste Stellung und sorgt ferner dafür, dass das Ventilelement in der ersten Stellung zum Verschließen der zugehörigen Öffnung in der Folienlage gehalten wird. In diesem Zusammenhang sei der guten Vollständigkeit halber noch angemerkt, dass unter den in den Ansprüchen verwendeten Begriff "Magnet" verschiedene Ausführungen fallen, bei denen beispielsweise als Magnetelement ein, vorzugsweise plättchenförmiger, Körper oder alternativ magnetisches oder magnetisierbares Material, beispielsweise durch Auftragen oder Einbringen, verwendet wird.

Somit ist bevorzugt die Anziehungskraft zu bemessen, das Ventilelement in die erste Stellung zu verbringen und in der ersten Stellung zu halten, wenn und solange der das Ventilelement beaufschlagende Druck der Flüssigkeit kleiner als der Schwellwert oder höchstens gleich dem Schwellwert ist.

Des Weiteren ist bevorzugt die Anziehungskraft zu bemessen, das Ventilelement in die erste Stellung zu verbringen, wenn der Abstand zwischen den beiden Magnetelementen einen vorbestimmten Maximalwert unterschreitet.

Nachdem in der zweiten Stellung des Ventilelementes, also in dessen im Wesentlichen vollständig geöffneten Stellung, die Flüssigkeit im Wesentlichen vollständig abgeleitet worden ist, wird das Ventilelement nicht mehr durch einen Flüssigkeitsdruck beaufschlagt. Demnach steht dann kein Flüssigkeitsdruck einem Rückverschwenken des Ventilelementes von der zweiten Stellung in die erste Stellung entgegen. Vielmehr muss für diese Schwenkbewegung lediglich das Gewicht des Ventilelementes überwunden werden. Somit ist bei einer bevorzugten Weiterbildung der zuvor erwähnten Ausführung die Rückstellkraft der Rückstellmittel so zu bemessen, dass sie im Wesentlichen nur dem Gewicht des Ventilelementes entgegenwirkt, um es von der zweiten Stellung in Richtung auf die erste Stellung zu verschwenken. Wenn sich während dieser Schwenkbewegung das Ventilelement der ersten Stellung, also der geschlossenen Stellung, annähert, wird dadurch zwangsläufig auch der Abstand zwischen den beiden Magnetelementen immer kleiner. Dies hat zur Folge, dass der Abstand zwischen den beiden Magnetelementen den erwähnten vorbestimmten Maximalwert unterschreitet, sodass dann die Anziehungskraft zwischen den beiden Magnetelementen zu wirken beginnt und somit die restliche Schwenkbewegung des Ventilelementes in die erste Stellung übernimmt. Nach alledem wird die Rückschwenkbewegung des Ventilelementes von der zweiten Stellung in die erste Stellung zunächst von der Rückstellkraft der Rückstellmittel und dann von der Anziehungskraft zwischen den beiden Magnetelementen bewirkt. Durch diese kombinierte Anwendung zunächst der Rückstellkraft der Rückstellmittel und dann der Anziehungskraft der beiden Magnetelemente lässt sich die Schwenkbewegung des Ventilelementes von der zweiten Stellung in die erste Stellung auf konstruktiv besonders einfache und zugleich wirkungsvolle Weise realisieren.

Wahlweise kann (1.) das erste Magnetventil magnetisches Material und das zweite Magnetelement magnetisierbares Material aufweisen oder (2.) das erste Magnetelement magnetisierbares Material und das zweite Magnetelement magnetisches Material aufweisen oder (3.) können beide Magnetelemente magnetisches Material aufweisen.

Bevorzugt ist das zweite Magnetelement am Ventilelement im Bereich des anderen Endes oder benachbart zu dessen anderem Ende vorgesehen, welches entfernt von dem einen Ende liegt oder dem einen Ende gegenüberliegt, mit dem das Ventilelement an der Folienlage schwenkbar befestigt ist.

Nachfolgend wird die Erfindung anhand eines bevorzugten Ausführungsbeispiels näher erläutert. Es zeigen:

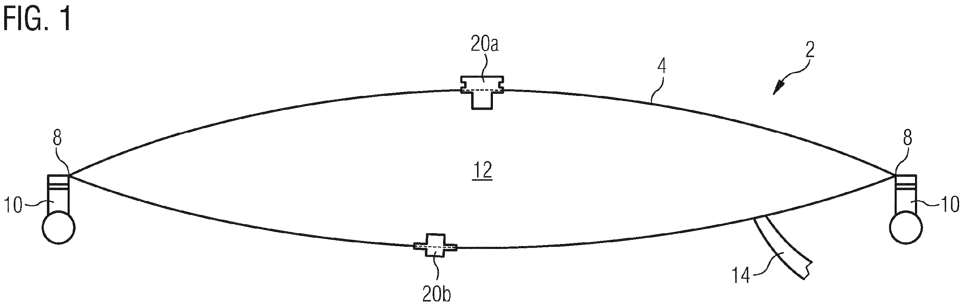

- Fig. 1: schematisch im Querschnitt ein Folienkissen eines Gebäudeumhüllungs-elementes mit jeweils einem Ventil gemäß einer bevorzugten Ausführung der Erfindung in beiden das Folienkissen begrenzenden Folienlagen;

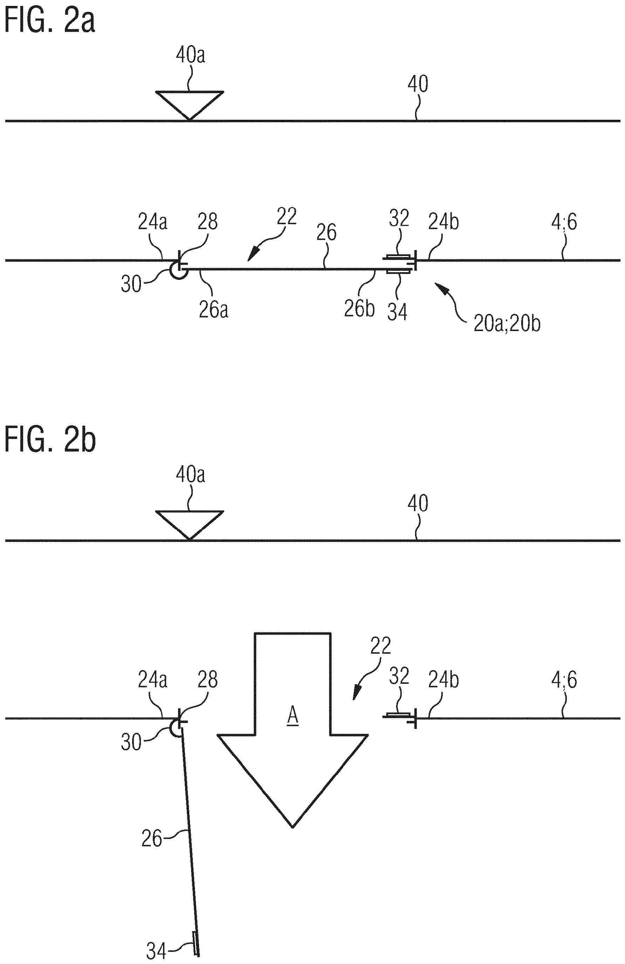

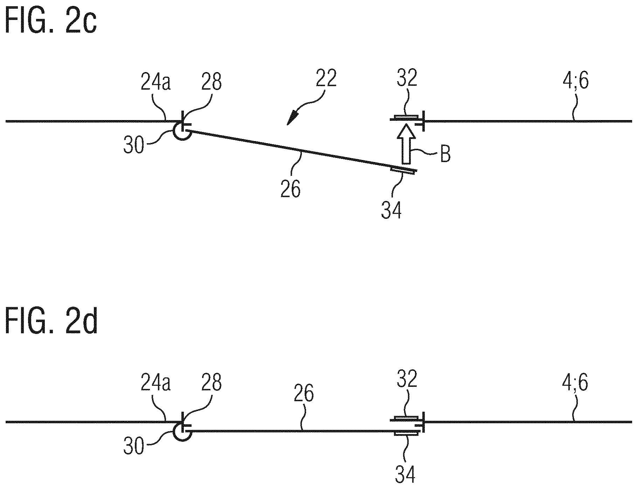

- Fig. 2: in einer ausschnittsweise vergrößerten Abbildung einen Abschnitt einer der beiden Folienlagen des Folienkissens von Fig. 1 mit schematischer Darstellung der Konstruktion des Ventils in einer geschlossenen ersten Stellung mit auf der Oberseite der Folienlage befindlichem Wasser (a), in einer im Wesentlichen vollständig geöffneten zweiten Stellung (b), in einer Schwenkstellung während der Schwenkbewegung von der geöffneten zweiten Stellung in die geschlossene erste Stellung (c) und wieder in der geschlossenen ersten Stellung mit nun vom Wasser befreiter Folienlage und somit ohne Belastung der Folienlage mit Wasser (d);

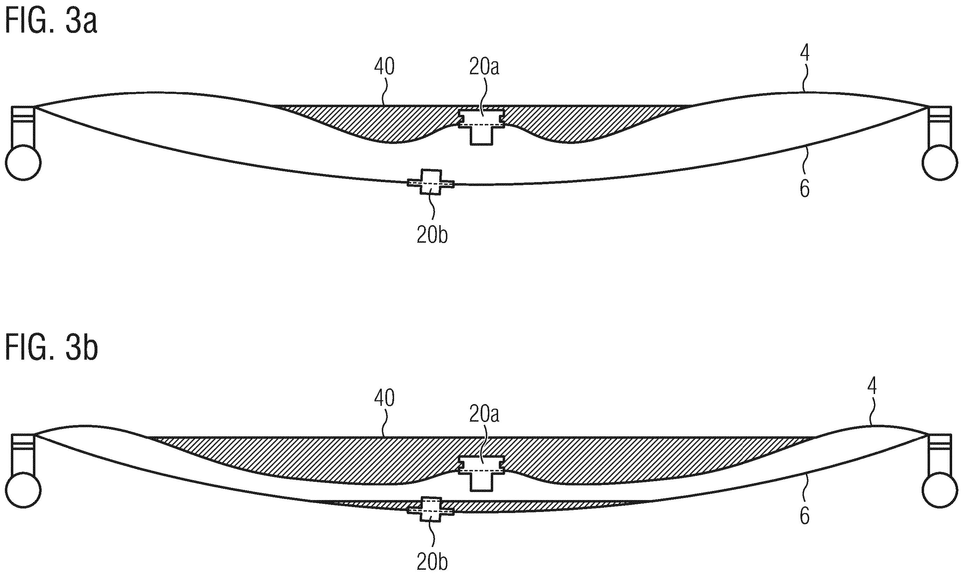

- Fig. 3: schematisch im Querschnitt das Folienkissen von Fig. 1 in einem ersten Zustand (a), in dem die obere Folienlage anfängt zu kollabieren und sich bereits Wasser auf der oberen Folienlage gebildet hat, jedoch beide Ventile noch geschlossen sind, und in einem zweiten Zustand (b), in dem die obere Folienlage teilweise kollabiert ist, sich weiteres Wasser auf der oberen Folienlage gebildet hat und nunmehr beide Ventile geöffnet sind, sodass bereits Wasser auf die untere Folienlage gelangt ist;

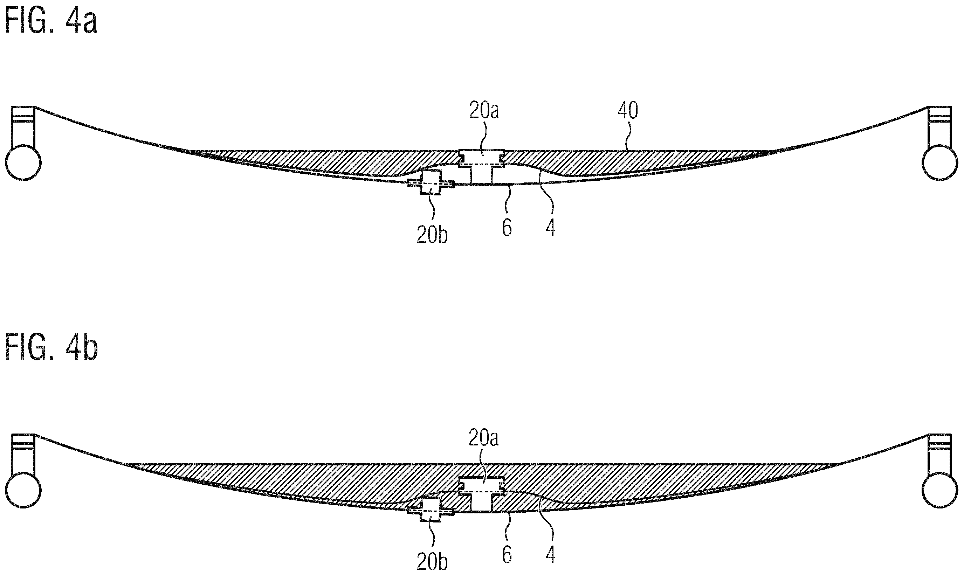

- Fig. 4: schematisch im Querschnitt das Folienkissen in einem ersten Zustand (a), in dem die obere Folienlage vollständig kollabiert ist und sich Wasser auf der oberen Folienlage gebildet hat, jedoch beide Ventile noch geschlossen sind, und in einem zweiten Zustand (b), in dem sich weiteres Wasser auf der vollständig kollabierten oberen Folienlage gesammelt hat und nun beide Ventile offen sind, sodass Wasser auf die untere Folienlage gelangt ist und durch das Ventil in der unteren Folienlage abgeleitet wird;

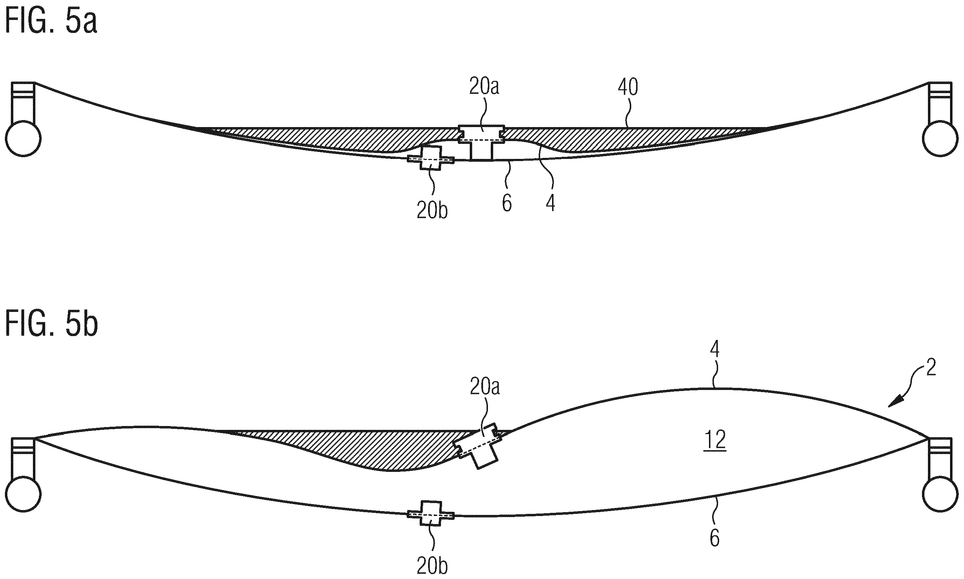

- Fig. 5: schematisch im Querschnitt das Folienkissen in einem ersten Zustand (a), in dem die obere Folienlage noch im Wesentlichen vollständig kollabiert ist, sich nunmehr nur noch verhältnismäßig wenig Wasser auf der oberen Folienlage befindet, beide Ventile wieder geschlossen sind und mit dem Einblasen von Druckluft in das Folienkissen begonnen wird, und in einem zweiten Zustand (b), in dem zur Aufrichtung der oberen Folienlage bereits weitere Druckluft in das Folienkissen eingeblasen worden ist und weiterhin die Ventile geschlossen sind; und

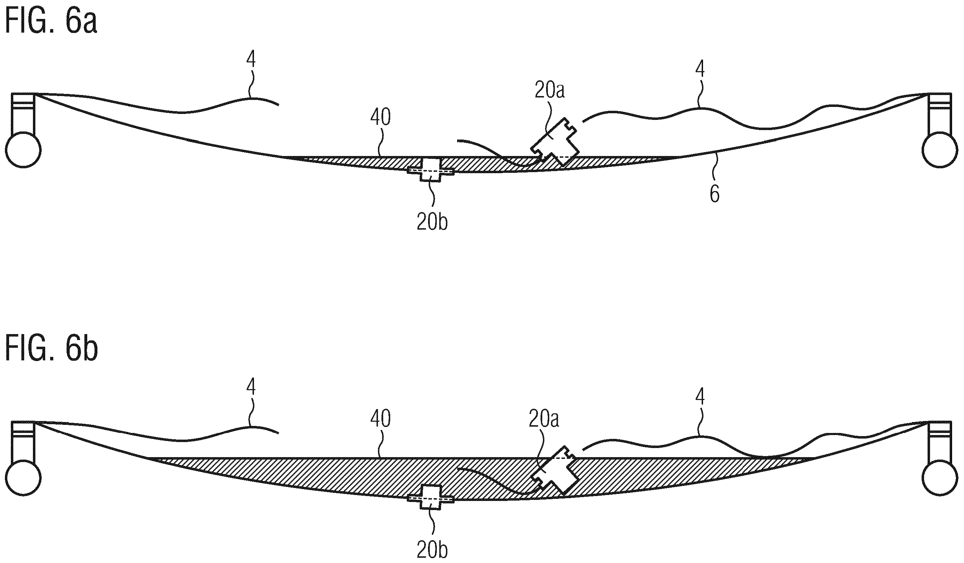

- Fig. 6: schematisch im Querschnitt das Folienkissen in einem ersten Zustand (a), in dem die obere Folienlage gerissen ist, dadurch das Ventil in der oberen Folienlage wirkungslos geworden ist und sich bereits Wasser auf der unteren Folienlage angesammelt hat, jedoch das Ventil in der unteren Folienlage noch geschlossen ist, und in einem zweiten Zustand (b), in dem sich weiteres Wasser auf der unteren Folienlage angesammelt hat und nunmehr das Ventil in der unteren Folienlage geöffnet ist, um das Wasser abzuleiten.

In Fig. 1 ist schematisch im Querschnitt ein Gebäudeumhüllungselement in Form eines Folienkissens 2 abgebildet, das mit einer Vielzahl weiterer Gebäudeumhüllungselemente bzw. Folienkissen ein Foliendach- oder Folienfassadensystem bilden kann. Im dargestellten Ausführungsbeispiel ist das Folienkissen 2 von einer oberen Folienlage 4 und einer unteren Folienlage 6 begrenzt. Die Folienlagen 4, 6 sind entlang ihrer Ränder 8 miteinander verschweißt und an einer Tragstruktur 10 befestigt. Zwischen den beiden Folienlagen 4, 6 ist ein im Wesentlichen fluiddichter Hohlraum 12 gebildet. Der Hohlraum 12 wird mit Druckluft gefüllt, wozu in der dargestellten Ausführung mit dem Hohlraum 12 eine Druckluftzufuhrleitung 14 kommuniziert, die an eine nicht dargestellte Druckluftversorgungseinrichtung angeschlossen und durch die untere Folienlage 6 geführt ist. Ferner ist in der oberen Folienlage 4 ein oberes erstes Ventil 20a und in der unteren Folienlage 6 ein unteres zweites Ventil 20b vorgesehen. Beide Ventile 20a, 20b dienen zur Ableitung von sich auf der Oberseite der jeweiligen Folienlage 4 bzw. 6 gesammelten Wasser, bei dem es sich gewöhnlich um Regenwasser handelt, was nachfolgend noch im Einzelnen näher erläutert wird.

Die beiden Ventile 20a, 20b haben im dargestellten Ausführungsbeispiel den gleichen Aufbau, welcher schematisch in Fig. 2 abgebildet ist. Wie Fig. 2 erkennen lässt, sind die Ventile 20a, 20b an der Folienlage 4 bzw. 6 jeweils im Bereich einer Öffnung 22 vorgesehen, die in der entsprechenden Folienlage 4 bzw. 6 ausgebildet ist und von gegenüberliegenden Randabschnitten 24a, 24b der Folienlage 4 bzw. 6 begrenzt wird. Des Weiteren weisen die Ventile 20a, 20b jeweils ein Ventilelement 26 auf, das im dargestellten Ausführungsbeispiel als im Wesentlichen starre Klappe ausgebildet ist und mit ihrem einen Ende 26a am benachbarten Randabschnitt 24a der Folienlage 4 bzw. 6 über ein Scharnier 28 verschwenkbar angeordnet ist, so dass das Ventilelement 26 mit einem dem einen Ende 26a gegenüberliegenden anderen Ende 26b gegenüber dem anderen Randabschnitt 24b der Folienlage 4 bzw. 6 bewegbar ist. Im Bereich des Scharniers 28 ist noch eine Feder 30 vorgesehen, die bevorzugt als Spiralfeder ausgebildet ist und das Ventilelement 26 in eine geschlossene erste Stellung vorspannt, in der das Ventilelement 26 in Fig. 2a dargestellt ist. Hierzu ist die Federkraft der Feder 30 im Wesentlichen nur so bemessen, dass sie dem Eigengewicht des Ventilelementes 26 entgegen wirkt.

An dem anderen Randabschnitt 24b der Folienlage 4 bzw. 6 ist ein erster Magnet 32 angeordnet. Im dargestellten Ausführungsbeispiel ist der erste Magnet 32 als plättchenförmiger Körper ausgebildet, der flächig an oder auf dem Randabschnitt 24b der Folienlage 4 bzw. 6 angeordnet ist. Alternativ ist es aber auch denkbar, den ersten Magneten 32 in den Randabschnitt 24b der Folienlage 4 bzw. 6 und somit in die Folienlage 4 bzw. 6 einzuformen oder den Randabschnitt 24b oder einen Teil dieses Randabschnittes 24b mit magnetischem oder magnetisierbarem Material zu versehen, beispielsweise durch Auftragen oder Einbringen von magnetischem oder magnetisierbarem Material. Alle diese vorgenannten Ausführungen und auch weitere entsprechend geeignete, nicht genannte Ausführungen fallen im vorliegenden Kontext gleichermaßen unter den hier verwendeten Begriff "Magnet". Als Gegenmagnet ist ein zweiter Magnet 34 an dem dem einen Ende 26a und dem Scharnier 28 gegenüberliegenden anderen Ende 26b des Ventilelementes 26 angeordnet, so dass dieser zweite Magnet 34 in der in Fig. 2a dargestellten geschlossenen ersten Stellung des Ventilelementes 26 benachbart zum ersten Magneten 32 am Randabschnitt 24b der Folienlage 4 bzw. 6 benachbart liegt oder sogar diesen berührt. Ähnlich wie der erste Magnet 32 ist im dargestellten Ausführungsbeispiel auch der zweite Magnet 34 als plättchenförmiger Körper aus magnetischem oder magnetisierbarem Material ausgebildet. Anstelle einer Anordnung an oder auf dem Ventilelement 26 ist es beispielsweise alternativ auch denkbar, den zweiten Magneten 34 in das andere Ende 26b des Ventilelementes 26 einzuformen oder das andere Ende 26b des Ventilelementes 26 mit magnetischem oder magnetisierbarem Material zu versehen, beispielsweise durch Auftragen oder Einbringen von magnetischem oder magnetisierbarem Material. Bevorzugt weisen beide Magneten 32, 34 magnetisches Material auf; alternativ ist es aber auch denkbar, dass der erste Magnet 32 magnetisches Material und der zweite Magnet 34 magnetisierbares Material oder umgekehrt der erste Magnet 32 magnetisierbares Material und der der zweite Magnet 34 magnetisches Material aufweist. Beide Magneten 32, 34 sind so zueinander ausgerichtet, dass sie eine sich gegenseitig anziehende Magnetkraft erzeugen. Die so erzeugte Anziehungskraft sorgt dafür, dass das Ventilelement 26 in der geschlossenen ersten Stellung gemäß Fig. 2a gehalten wird, und bildet somit eine Zuhaltekraft. Im normalen Betriebszustand muss das Ventilelement 26 lediglich Lasten aus Windböen standhalten und im Falle der Verwendung eines Folienkissens 2, wie in Fig. 1 dargestellt, noch dem im Hohlraum 12 des Folienkissens 2 herrschenden Luftdruck standhalten.

In bestimmten, in der Regel unerwünschten Situation, auf die nachfolgend noch näher eingegangen wird, sammelt sich Wasser, insbesondere Regenwasser auf der Oberseite mindestens einer der beiden Folienlagen 4 oder 6, in der Regel zunächst auf der Oberseite der oberen Folie 4 gemäß Fig. 1. Gleiches gilt auch für den Fall der Verwendung eines einlagigen Foliendach- oder Folienfassadensystems, bei dem im Gegensatz zu dem in Fig. 1 dargestellten Folienkissen nur die Folienlage 4 als einzige Folienlage zum Einsatz kommt. Dieser Zustand ist schematisch in Fig. 2a dargestellt, in der in einem Abstand auf der Oberseite der von Folienlage 4 bzw. 6 und Ventilelement 26 gesammeltes Wasser 40 schematisch abgebildet ist, wobei der Pfeil 40a die Wassersäule symbolisiert, mit der das Wasser 40 auf die Folienlage 4 bzw. 6 und das Ventilelement 26 drückt. Somit wird das Ventilelement 26 mit der Last aus der Wassersäule 40a beaufschlagt. Die Wassersäule 40a kann bis zu einer definierten Höhe oberhalb des Ventilelements 26 gehalten werden. Die Anziehungskraft der beiden Magneten 32, 34 ist so bemessen, dass das Ventilelement 26 in der geschlossenen ersten Stellung gehalten wird, wenn und solange das Ventilelement 26 mit einem Druck entsprechend der Höhe der Wassersäule 40a kleiner als ein vorbestimmter Schwellwert oder höchstens gleich dem Schwellwert beaufschlagt wird. Natürlich lässt sich die Anziehungskraft und somit die Zuhaltekraft über die Stärke der Magneten 32, 34 variieren.

Mit weiterer Zunahme des Wassers 40 steigt die Wassersäule 40a an. Wenn diese eine definierte Höhe überschreitet, die dem zuvor erwähnten definierten Schwellwert entspricht, wird die Anziehungskraft der Magneten 32, 34 überwunden, so dass sich das Ventilelement 26 gegen die Federkraft der Feder 30 in Richtung des Pfeils A in die geöffnete zweite Stellung öffnet. Hierzu klappt das Ventilelement 26 nach unten, so dass die geöffnete zweite Stellung unterhalb der geschlossenen ersten Stellung liegt, wie Fig. 2b erkennen lässt. Das Verschwenken des Ventilelements 26 in die untere geöffnete zweite Stellung wird demnach durch den Wasserdruck bewirkt. Wie Fig. 2b erkennen lässt, gibt das Ventilelement 26 in seiner geöffneten zweiten Stellung den im Wesentlichen kompletten Querschnitt der Öffnung 22 in der Folienlage 4 bzw. 6 frei, so dass die Öffnung 22 im Wesentlichen vollständig frei liegt. Dies hat zur Folge, dass das Wasser 40 in Richtung des Pfeils A mit einer hohen Durchflussrate und somit schnell durch die Öffnung 22 strömen und somit abgeleitet werden kann.

Nachdem das Wasser im Wesentlichen vollständig abgeleitet worden ist, wird das Ventilelement 26 nicht mehr durch einen Wasserdruck beaufschlagt. Demnach steht dann kein Wasserdruck einem Rückverschwenken des Ventilelements 26 einer geöffneten zweiten Stellung in die geschlossene erste Stellung entgegen. Vielmehr muss für diese Schwenkbewegung lediglich das Gewicht des Ventilelement 26 überwunden werden. Wie bereits zuvor angesprochen, ist demnach die Federkraft der Feder 30 so bemessen, dass sie im Wesentlichen nur dem Gewicht des Ventilelement 26 und somit der Wirkung der Schwerkraft auf das Ventilelement 26 entgegenwirkt, um es von der geöffneten zweiten Stellung in Richtung auf die geschlossene erste Stellung zu verschwenken, was in Fig. 2c durch den Pfeils B angedeutet ist. Somit ist die Federkraft der Feder 30 derart verhältnismäßig gering, dass sie ein Öffnen des Ventilelement 26 und somit ein Verschwenken in die geöffnete zweite Stellung gemäß Fig. 2b aufgrund des Wasserdruckes nicht verhindern kann, sondern vom Wasserdruck sozusagen überdrückt wird.

In Fig. 2c ist nun das Ventilelement 26 in einer Schwenkstellung während der Schwenkbewegung von der geöffneten zweiten Stellung in Richtung auf die geschlossene erste Stellung dargestellt. Wenn sich während dieser von der Feder 30 bewirkten Schwenkbewegung das Ventilelement 26 der geschlossenen ersten Stellung annähert, wird dadurch zwangsläufig auch der Abstand zwischen den beiden Magneten 32, 34 immer kleiner. Dies hat zur Folge, dass der Abstand zwischen den beiden Magneten 32, 34 einen vorbestimmten Maximalwert unterschreitet, so dass dann die Anziehungskraft zwischen den beiden Magneten 32, 34 zu wirken beginnt und die restliche Schwenkbewegung des Ventilelement 26 in die geschlossene erste Stellung übernimmt. Somit wird die Rückschwenkbewegung des Ventilelementes 26 von der geöffneten zweiten Stellung in die geschlossene erste Stellung zunächst von der Federkraft der Feder 30 und dann von der Anziehungskraft zwischen den beiden Magneten 32, 34 bewirkt.

Fig. 2d zeigt das Ventilelement 26 wieder in der geschlossenen ersten Stellung, wobei nun die Folienlage 4 bzw. 6 vom Wasser befreit ist und somit in diesem normalen Betriebszustand weder die Folienlage 4 bzw. 6 noch das Ventilelement 26 mit Wasserdruck beaufschlagt wird.

In den Figuren 3 bis 6 sind beispielhaft für das in Fig. 1 gezeigte Folienkissen 2 verschiedene Szenarien dargestellt, in denen die Verwendung der Ventile 20a, 20b eine Rolle spielen.

In Fig. 3 ist ein Szenario dargestellt, bei welcher die obere Folienlage 4 teilweise kollabiert. Dieser Zustand ist in der Regel Folge von kleinen Lecks oder Störungen in der Druckluftzufuhr. Dabei sorgen starke Windlasten dafür, dass die obere Folienlage 4 teilweise kollabiert und sich dort Wasser 40 sammelt, wie Fig. 3a erkennen lässt. In diesem Zustand sind beide Ventile 20a, 20b noch geschlossen. Während Fig. 3a einen Zustand zeigt, in dem die obere Folienlage 4 erst anfängt zu kollabieren und sich bereits Wasser 40 auf der oberen Seite der oberen Folienlage 4 gebildet hat, zeigt Fig. 3b einen fortgeschrittenen Zustand, in dem nun die obere Folienlage 4 stärker kollabiert ist und sich weiteres Wasser 40 auf der oberen Folienlage 4 gebildet hat. Dies führt dazu, dass sich das obere Ventil 20a öffnet, wodurch das Wasser 40 auf die untere Folienlage 6 abgeleitet wird. Somit wird nicht nur die untere Folienlage 6, sondern auch das dort angeordnete untere Ventil 20b mit steigendem Wasserdruck beaufschlagt. Dies führt wiederum dazu, dass sich auch das untere Ventil 20b öffnet und somit das Wasser 40 nach außen ableitet, bis das kollabierte Folienkissen 2 im Wesentlichen vollständig von Wasser befreit ist.

Je nach Bedarf können die beiden Ventile 20a, 20b wahlweise auf gleiche oder unterschiedliche Schwellwerte eingestellt sein, bei denen die Anziehungskraft der Magneten 32, 34 überwunden wird und das Ventilelement 26 von der oberen geschlossenen ersten Stellung in die untere geöffnete zweite Stellung verschwenkt (vgl. hierzu Fig. 2), was im Übrigen grundsätzlich für alle Szenarien und Ausführungen und somit auch für die nachfolgend anhand der Fig. 4 bis 6 beschriebenen weiteren Szenarien gelten kann.

Fig. 4 zeigt ein Szenario, bei dem die obere Folienlage 4 im Wesentlichen vollständig kollabiert, und zwar in Folge eines im Wesentlichen vollständigen Druckverlustes und ggf. unter zusätzlichem Einfluss von starken Windlasten. Dabei zeigt Fig. 4a einen Zustand, in dem die obere Folienlage 4 zwar bereits vollständig kollabiert ist und sich deshalb bereits Wasser 40 auf der oberen Folienlage 4 gebildet hat, jedoch beide Ventile 20a, 20b noch geschlossen sind. Fig. 4b zeigt einen fortgeschrittenen Zustand, in dem sich weiteres Wasser 40 auf der vollständig kollabierten oberen Folienlage 4 gesammelt hat und aufgrund des dadurch gestiegenen Wasserdruckes nicht nur das obere Ventil 20a, sondern auch gleichzeitig das untere Ventil 20b öffnet, da über die kollabierte obere Folienlage 4 der Wasserdruck nun ebenfalls in ähnlicher oder gleicher Stärke auf das untere Ventil 20b wirkt.

Fig. 5 zeigt beispielhaft anhand von zwei Zuständen die Wiederherstellung des ursprünglich kollabierten Folienkissens durch Einblasen neuer Druckluft und dadurch bedingter Rückführung der oberen Folienlage 4 von der kollabierten unteren Stellung in die obere normale Betriebsstellung, in der die obere Folienlage 4 dann wieder die in Fig. 1 abgebildete, nach oben gekrümmte Form einnimmt. In Fig. 5a ist hierzu ein erster Zustand abgebildet, in dem die obere Folienlage 4 zwar noch im Wesentlichen vollständig kollabiert ist, sich jedoch noch verhältnismäßig wenig Wasser 40 auf der oberen Folienlage 4 befindet, so dass nun beide Ventile 20a, 20b wieder geschlossen sind und mit dem Einblasen von Druckluft in das Folienkissen begonnen wird. Fig. 5b zeigt einen fortgeschrittenen Zustand, in dem zur Aufrichtung der oberen Folienlage 4 bereits weitere Druckluft in das Folienkissen 2 eingeblasen worden ist und weiterhin natürlich die Ventile 20a, 20b geschlossen sind. Zwar verbleibt während dieses Wiederherstellungsprozesses zunächst noch ein kleiner wannenförmiger Abschnitt in der oberen Folienlage 4, in dem noch restliches Wasser 40 gesammelt ist, jedoch verschwindet mit zunehmendem Aufblasen des Folienkissens 2 dieser wannenförmige Abschnitt, wodurch das dort noch verbliebene restliche Wasser 40 seitlich abläuft.

In Fig. 6 ist schließlich noch ein weiteres Szenario gezeigt, bei dem die obere Folienlage 4 aufgrund sehr hoher Windlasten reißt, wodurch die untere Folienlage 6 wie eine Wanne nach oben und außen freigelegt wird. Die gerissene obere Folienlage 4 kann nun Regenwasser nicht mehr abhalten oder aufnehmen; vielmehr gelangt das Wasser 40 unmittelbar auf die Oberseite der unteren Folienlage 6 und sammelt sich dort. Wegen des gerissenen Zustandes der oberen Folienlage 4 ist das obere Ventil 20a wirkungslos. Fig. 6a zeigt einen ersten Zustand, in dem die obere Folienlage 4 bereits gerissen ist, dadurch das obere Ventil 20a wirkungslos geworden ist und sich bereits Wasser 40 auf der unteren Folienlage 6 angesammelt hat, jedoch aufgrund noch nicht ausreichenden Wasserdruckes das untere Ventil 20b noch geschlossen ist. Fig. 6b zeigt einen fortgeschrittenen Zustand, in dem sich weiteres Wasser 40 auf der unteren Folienlage 6 angesammelt hat und durch den steigenden Wasserdruck nunmehr das untere Ventil 20b geöffnet ist, um das Wasser 40 nach unten mittels Schwerkraft abzuleiten.

## Patentansprüche

1. Gebäudeumhüllungselement mit einem Folienkissen (2), das mindestens eine obere Folienlage (4) und eine untere Folienlage (6) aufweist, wobei zwischen der oberen Folienlage (4) und der unteren Folienlage (6) mindestens ein im Wesentlichen fluiddicht geschlossener Hohlraum (12) gebildet ist, in dem ein fluides Medium, insbesondere Luft, enthalten ist, das fluide Medium in dem Hohlraum (12) mit einem Druck beaufschlagbar ist, in der oberen Folienlage (4) ein oberes erstes Ventil (20a) und in der unteren Folienlage (6) ein unteres zweites Ventil (20b) vorgesehen ist und beide Ventile (20a, 20b) zur Ableitung von sich auf einer Oberseite der jeweiligen Folienlage (4, 6) gesammelter Flüssigkeit (40), insbesondere Regenwasser, dienen,
wobei
das obere erste Ventil (20a)
- ein erstes Ventilelement (26), das im Bereich einer in der oberen Folienlage (4) vorgesehenen ersten Öffnung (22) derart anordenbar ist, dass es zwischen einer die erste Öffnung (22) verschließenden ersten Stellung und einer die erste Öffnung (22) zumindest teilweise freigebenden zweiten Stellung verschwenkbar ist, und
- an der oberen Folienlage (4) anbringbare erste Öffnungs- und Schließmittel (30, 32, 34), die ausgebildet sind, das erste Ventilelement (26) in der ersten Stellung zu halten, solange der das erste Ventilelement (26) beaufschlagende Druck (40a) einer auf die Oberseite der oberen Folienlage (4) gelangten Flüssigkeit (40) kleiner als ein vorbestimmter erster Schwellwert oder höchstens gleich diesem Schwellwert ist, ein Verschwenken des ersten Ventilelements (26) von der ersten Stellung in die zweite Stellung zu ermöglichen, wenn der das erste Ventilelement (26) beaufschlagende Druck (40a) der Flüssigkeit (40) den ersten Schwellwert übersteigt, und das erste Ventilelement (26) von der zweiten Stellung in die erste Stellung zu verschwenken, nachdem der das erste Ventilelement (26) beaufschlagende Druck (40a) der Flüssigkeit (40) im Wesentlichen nicht mehr vorhanden ist,
aufweist und
das untere zweite Ventil (20b)
- ein zweites Ventilelement (26), das im Bereich einer in der unteren Folienlage (6) vorgesehenen zweiten Öffnung (22) derart anordenbar ist, dass es zwischen einer die zweite Öffnung (22) verschließenden ersten Stellung und einer die zweite Öffnung (22) zumindest teilweise freigebenden zweiten Stellung verschwenkbar ist, und
- an der unteren Folienlage (6) anbringbare zweite Öffnungs- und Schließmittel (30, 32, 34), die ausgebildet sind, das zweite Ventilelement (26) in der ersten Stellung zu halten, solange der das zweite Ventilelement (26) beaufschlagende Druck (40a) einer auf die Oberseite der unteren Folienlage (6) gelangten Flüssigkeit (40) kleiner als ein vorbestimmter zweiter Schwellwert oder höchstens gleich diesem Schwellwert ist, ein Verschwenken des zweiten Ventilelements (26) von der ersten Stellung in die zweite Stellung zu ermöglichen, wenn der das zweite Ventilelement (26) beaufschlagende Druck (40a) der Flüssigkeit (40) den zweiten Schwellwert übersteigt, und das zweite Ventilelement (26) von der zweiten Stellung in die erste Stellung zu verschwenken, nachdem der das zweite Ventilelement (26) beaufschlagende Druck (40a) der Flüssigkeit (40) im Wesentlichen nicht mehr vorhanden ist,
aufweist,
wobei das untere zweite Ventil (20b) gegenüber dem oberen ersten Ventil (20a) seitlich versetzt angeordnet ist und
wobei das untere zweite Ventil (20b) in einem ersten Fall, wonach die obere Folienlage (4) teilweise kollabiert und sich das obere erste Ventil (20a) öffnet, wodurch die Flüssigkeit (40) auf die untere Folienlage (6) abgeleitet wird, öffnet und somit die Flüssigkeit (40) nach außen ableitet, bis das kollabierte Folienkissen (2) im Wesentlichen vollständig von Flüssigkeit befreit ist, und in einem zweiten Fall, wonach die obere Folienlage (4) reißt und dadurch das obere erste Ventil (20a) wirkungslos wird, wenn der das zweite Ventilelement (26) beaufschlagende Druck (40a) der Flüssigkeit (40) den zweiten Schwellwert übersteigt, öffnet, um die Flüssigkeit (40) nach unten mittels Schwerkraft abzuteilen.

2. Gebäudeumhüllungselement nach Anspruch 1, **dadurch gekennzeichnet, dass** das Ventilelement als flexible oder elastische Lasche ausgebildet ist, die mit ihrem einen Ende an der Folienlage befestigbar und mit ihrem anderen Ende gegenüber der Öffnung bewegbar ist.

3. Gebäudeumhüllungselement nach Anspruch 2, **dadurch gekennzeichnet, dass** das Ventilelement zumindest abschnittsweise aus Folienmaterial hergestellt ist.

4. Gebäudeumhüllungselement nach Anspruch 1, **dadurch gekennzeichnet, dass** das Ventilelement (26) als Klappe ausgebildet ist, die mit ihrem einen Ende (26a) um ein gegenüber der Folienlage (4; 6) im Wesentlichen ortsfest montierbares Scharnier (28) verschwenkbar und mit ihrem anderen Ende (26b) gegenüber der Öffnung (22) bewegbar ist.

5. Gebäudeumhüllungselement nach Anspruch 4, **dadurch gekennzeichnet, dass** die Klappe ein im Wesentlichen starres Element bildet.

6. Gebäudeumhüllungselement nach mindestens einem der vorangegangenen Ansprüche, **dadurch gekennzeichnet, dass** die Öffnungs- und Schließmittel Rückstellmittel (30) aufweisen, die eine Rückstellkraft erzeugen, um das Ventilelement (26) von der zweiten Stellung in Richtung auf die erste Stellung zu verschwenken.

7. Gebäudeumhüllungselement nach Anspruch 6, **dadurch gekennzeichnet, dass** die Rückstellmittel Federmittel (30) aufweisen, die als Rückstellkraft eine Federkraft erzeugen.

8. Gebäudeumhüllungselement nach Anspruch 4 sowie nach Anspruch 6 oder 7, **dadurch gekennzeichnet, dass** die Federmittel (30) mindestens eine Spiralfeder aufweisen, die im Bereich des Scharniers (28) oder am Scharnier (28) angeordnet ist.

9. Gebäudeumhüllungselement nach mindestens einem der Ansprüche 6 bis 8, **dadurch gekennzeichnet, dass** die Rückstellkraft so bemessen ist, das Ventilelement in der ersten Stellung zu halten, solange der das Ventilelement beaufschlagende Druck der Flüssigkeit kleiner als der Schwellwert oder höchstens gleich dem Schwellwert ist.

10. Gebäudeumhüllungselement nach mindestens einem vorangegangenen Ansprüche 1 bis 8, **dadurch gekennzeichnet, dass** die Öffnungs- und Schließmittel ein an und/oder in der Folienlage (4; 6) anbringbares erstes Magnetelement (32) und ein am und/oder im Ventilelement (26) vorgesehenes zweites Magnetelement (34) aufweisen, wobei die beiden Magnetelemente (32; 34) so ausgebildet und zueinander ausgerichtet sind, dass eine auf die beiden Magnetelemente (32; 34) wirkende Anziehungskraft erzeugt wird.

11. Gebäudeumhüllungselement nach Anspruch 10, **dadurch gekennzeichnet, dass** die Anziehungskraft bemessen ist, das Ventilelement (26) in die erste Stellung zu verbringen und in der ersten Stellung zu halten, wenn und solange der das Ventilelement (26) beaufschlagende Druck (40a) der Flüssigkeit (40) kleiner als der Schwellwert oder höchstens gleich dem Schwellwert ist.

12. Gebäudeumhüllungselement nach Anspruch 10 oder 11, **dadurch gekennzeichnet, dass** die Anziehungskraft bemessen ist, das Ventilelement (26) in die erste Stellung zu verbringen, wenn der Abstand zwischen den beiden Magnetelementen (32; 34) einen vorbestimmten Maximalwert unterschreitet.

13. Gebäudeumhüllungselement nach Anspruch 7 oder 8 sowie nach Anspruch 12, **dadurch gekennzeichnet, dass** die Rückstellkraft so bemessen ist, im Wesentlichen lediglich dem Gewicht des Ventilelementes (26) entgegenzuwirken, um es von der zweiten Stellung in Richtung auf die erste Stellung zu verschwenken.

14. Gebäudeumhüllungselement nach mindestens einen der Ansprüche 10 bis 13, **dadurch gekennzeichnet, dass** a) das erste Magnetelement (32) magnetisches Material und das zweite Magnetelement (34) magnetisierbares Material aufweist oder b) das erste Magnetelement (32) magnetisierbares Material und das zweite Magnetelement (34) magnetisches Material aufweist oder c) beide Magnetelemente (32; 34) magnetisches Material aufweisen.

15. Gebäudeumhüllungselement nach mindestens einen der Ansprüche 10 bis 14 sowie nach Anspruch 2 oder 4, **dadurch gekennzeichnet, dass** das zweite Magnetelement (34) am Ventilelement (26) im Bereich des anderen Endes (26b) oder benachbart zu dessen anderem Ende (26b) vorgesehen ist.

## Claims

1. Building cladding element comprising a film cushion (2) comprising at least an upper film layer (4) and a lower film layer (6), wherein at least one substantially fluid-tightly closed cavity (12) is formed between the upper film layer (4) and the lower film layer (6), with a fluid medium, in particular air, being contained in said cavity and the fluid medium in the cavity (12) being chargeable with a pressure, and with an upper first valve (20a) being provided in the upper film layer (4) and a lower second valve (20b) being provided in the lower film layer (6), both valves (20a, 20b) serving to drain liquid (40), in particular rainwater, that has collected on an upper side of the particular film layer (4, 6),
wherein
the upper first valve (20a) has
- a first valve element (26) which can be arranged in the region of a first opening (22), which is provided in the upper film layer (4), in such a way that it is pivotable between a first position in which it closes the first opening (22) and a second position in which it at least partially frees the first opening (22), and
- first opening and closing means (30, 32, 34) which can be mounted on the upper film layer (4) and which are designed to hold the first valve element (26) in the first position as long as the pressure (40a), which acts on the first valve element (26), of a liquid (40) which has come onto the upper side of the upper film layer (4) is less than a predetermined first threshold value or at most equal to this threshold value, to allow a pivoting movement of the first valve element (26) from the first position into the second position if the pressure (40a) of the liquid (40) acting on the first valve element (26) exceeds the first threshold value, and to pivot the first valve element (26) from the second position into the first position after the pressure (40a) of the liquid (40) acting on the first valve element (26) is substantially no longer present,
and
the lower second valve (20b) has
- a second valve element (26) which can be arranged in the region of a second opening (22), which is provided in the lower film layer (6), in such a way that it is pivotable between a first position in which it closes the second opening (22) and a second position in which it at least partially frees the second opening (22), and
- second opening and closing means (30, 32, 34) which can be mounted on the lower film layer (6) and which are designed to hold the second valve element (26) in the first position as long as the pressure (40a), which acts on the second valve element (26), of a liquid (40) which has come onto the upper side of the lower film layer (6) is less than a predetermined second threshold value or at most equal to this threshold value, to allow a pivoting movement of the second valve element (26) from the first position into the second position if the pressure (40a) of the liquid (40) acting on the second valve element (26) exceeds the second threshold value, and to pivot the second valve element (26) from the second position into the first position after the pressure (40a) of the liquid (40) acting on the second valve element (26) is substantially no longer present,
wherein the lower second valve (20b) is arranged laterally offset in relation to the upper first valve (20a), and
wherein the lower second valve (20b) in a first case, according to which the upper film layer (4) partially collapses and the upper first valve (20a) opens, whereby the liquid (40) is drained onto the lower film layer (6), opens and thus drains the liquid (40) outwardly until the collapsed film cushion (2) is substantially fully freed of liquid, and in a second case, according to which the upper film layer (4) tears and the upper first valve (20a) is thus rendered ineffective when the pressure (40a) of the liquid (40) acting on the second valve element (26) exceeds the second threshold value, opens in order to drain the liquid (40) downward by means of gravity.

2. Building cladding element according to claim 1, **characterised in that** the first valve element is designed as a flexible or elastic tab which can be fastened by its one end to the film layer and is movable by its other end with respect to the opening.

3. Building cladding element according to claim 2, **characterised in that** the valve element is produced at least in some portions from film material.

4. Building cladding element according to claim 1, **characterised in that** the first valve element (26) is designed as a flap which is pivotable by its one end (26a) about a hinge (28), which can be mounted in a substantially positionally fixed manner with respect to the film layer (4; 6), and is movable by its other end (26b) with respect to the opening (22).

5. Building cladding element according to claim 4, **characterised in that** the flap forms a substantially rigid element.

6. Building cladding element according to at least one of the preceding claims, **characterised in that** the opening and closing means have restoring means (30) which generate a restoring force in order to pivot the valve element (26) from the second position in the direction of the first position.

7. Building cladding element according to claim 6, **characterised in that** the restoring means have spring means (30) which generate a spring force as restoring force.

8. Building cladding element according to claim 4 and according to claim 6 or 7, **characterised in that** the spring means (30) have at least one spiral spring which is arranged in the region of the hinge (28) or on the hinge (28).

9. Building cladding element according to at least one of claims 6 to 8, **characterised in that** the restoring force is of such a magnitude as to hold the valve element in the first position as long as the pressure of the liquid acting on the valve element is less than the threshold value or at most equal to the threshold value.

10. Building cladding element according to at least one of preceding claims 1 to 8, **characterised in that** the opening and closing means have a first magnet element (32) which can be mounted on and/or in the film layer (4; 6) and a second magnet element (34) which is provided on and/or in the valve element (26), wherein the two magnet elements (32; 34) are designed and oriented with respect to one another in such a way that an attraction force acting on the two magnet elements (32; 34) is generated.

11. Building cladding element according to claim 10, **characterised in that** the attraction force is of such a magnitude as to bring the valve element (26) into the first position and to hold it in the first position if and as long as the pressure (40a) of the liquid (40) acting on the valve element (26) is less than the threshold value or at most equal to the threshold value.

12. Building cladding element according to claim 10 or 11, **characterised in that** the attraction force is of such a magnitude as to bring the valve element (26) into the first position if the distance between the two magnet elements (32; 34) falls below a predetermined maximum value.

13. Building cladding element according to claim 7 or 8 and according to claim 12, **characterised in that** the restoring force is of such a magnitude that it substantially counteracts only the weight of the valve element (26) in order to pivot it from the second position in the direction of the first position.

14. Building cladding element according to at least one of claims 10 to 13, **characterised in that** a) the first magnet element (32) comprises magnetic material and the second magnet element (34) comprises magnetisable material, or b) the first magnet element (32) comprises magnetisable material and the second magnet element (34) comprises magnetic material, or c) both magnet elements (32; 34) comprise magnetic material.

15. Building cladding element according to at least one of claims 10 to 14 and according to claim 2 or 4, **characterised in that** the second magnet element (34) is provided on the valve element (26) in the region of the other end (26b) or adj acent to its other end (26b).

## Revendications

1. Elément d'enveloppe de bâtiment avec un coussin à feuilles (2), qui présente au moins une couche de feuille supérieure (4) et une couche de feuille inférieure (6), dans lequel est formé entre la couche de feuille supérieure (4) et la couche de feuille inférieure (6) au moins un espace creux (12) fermé de manière sensiblement étanche aux fluides, dans lequel est contenu un milieu fluide, en particulier de l'air, le milieu fluide peut être soumis à l'action d'une pression dans l'espace creux (12), une première vanne supérieure (20a) est prévue dans la couche de feuille supérieure (4) et une deuxième vanne inférieure (20b) est prévue dans la couche de feuille inférieure (6) et les deux vannes (20a, 20b) servent à dévier du liquide (40) collecté sur un côté supérieur de la couche de feuille (4, 6) respective, en particulier de l'eau de pluie,
dans lequel
la première vanne supérieure (20a) présente
- un premier élément de vanne (26), qui peut être disposé dans la zone d'une première ouverture (22) prévue dans la couche de feuille supérieure (4) de telle manière qu'il peut pivoter entre une première position fermant la première ouverture (22) et une deuxième position dégageant au moins en partie la première ouverture (22), et
- des premiers moyens d'ouverture et de fermeture (30, 32, 34) pouvant être installés sur la couche de feuille supérieure (4), qui sont réalisés pour maintenir le premier élément de vanne (26) dans la première position tant que la pression (40a), soumettant le premier élément de vanne (26) à une action, d'un liquide (40) parvenant sur le côté supérieur de la couche de feuille supérieure (4) est inférieure à une première valeur de seuil prédéfinie ou est égale au maximum à ladite valeur de seuil, pour permettre un pivotement du premier élément de vanne (26) depuis la première position dans la deuxième position lorsque la pression (40a) du liquide (40) soumettant le premier élément de vanne (26) à une action dépasse la première valeur de seuil, et pour pivoter le premier élément de vanne (26) depuis la deuxième position dans la première position après que la pression (40a) du liquide (40) soumettant le premier élément de vanne (26) à une action n'est sensiblement plus présente, et
la deuxième vanne inférieure (20b) présente
- un deuxième élément de vanne (26), qui peut être disposé dans la zone d'une deuxième ouverture (22) prévue dans la couche de feuille inférieure (6) de telle manière qu'il peut pivoter entre une première position fermant la deuxième ouverture (22) et une deuxième position dégageant au moins en partie la deuxième ouverture (22), et
- des deuxièmes moyens d'ouverture et de fermeture (30, 32, 34) pouvant être installés sur la couche de feuille inférieure (6), qui sont réalisés pour maintenir le deuxième élément de vanne (26) dans la première position tant que la pression (40a), soumettant le deuxième élément de vanne (26) à une action, d'un liquide (40) parvenant sur le côté supérieur de la couche de feuille inférieure (6) est inférieure à une deuxième valeur de seuil prédéfinie ou est égale au maximum à ladite valeur de seuil, pour permettre un pivotement du deuxième élément de vanne (26) depuis la première position dans la deuxième position lorsque la pression (40a) du liquide (40) soumettant le deuxième élément de vanne (26) à une action dépasse la deuxième valeur de seuil, et pour pivoter le deuxième élément de vanne (26) depuis la deuxième position dans la première position après que la pression (40a) du liquide (40) soumettant le deuxième élément de vanne (26) à une action n'est sensiblement plus présente, et
dans lequel la deuxième vanne inférieure (20b) est disposée de manière décalée latéralement par rapport à la première vanne supérieure (20a), et
dans lequel la deuxième vanne inférieure (20b) s'ouvre dans un premier cas, selon lequel la couche de feuille supérieure (4) s'effondre en partie et la première vanne supérieure (20a) s'ouvre ce qui permet de dévier le liquide (40) sur la couche de feuille inférieure (6) et ainsi dévie le liquide (40) vers l'extérieur jusqu'à ce que le coussin à feuilles (2) effondré soit exempt sensiblement totalement du liquide, et dans un deuxième cas, selon lequel la couche de feuille supérieure (4) se déchire et la première vanne supérieure (20a) devient ainsi sans effet lorsque la pression (40a) du liquide (40) soumettant le deuxième élément de vanne (26) à une action dépasse la deuxième valeur de seuil pour séparer le liquide (40) vers le bas au moyen de la force de gravité.

2. Elément d'enveloppe de bâtiment selon la revendication 1, **caractérisé en ce que** l'élément de vanne est réalisé en tant qu'une languette flexible ou élastique, qui peut être fixée sur la couche de feuille par une extrémité et peut être déplacée par rapport à l'ouverture par son autre extrémité.

3. Elément d'enveloppe de bâtiment selon la revendication 2, **caractérisé en ce que** l'élément de vanne est fabriqué au moins par endroits à partir de matériau en feuille.

4. Elément d'enveloppe de bâtiment selon la revendication 1, **caractérisé en ce que** l'élément de vanne (26) est réalisé en tant que clapet qui peut être pivoté par une extrémité (26a) autour d'une charnière (28) pouvant être montée de manière sensiblement stationnaire par rapport à la couche de feuille (4 ; 6) et peut être déplacé par son autre extrémité (26b) par rapport à l'ouverture (22).

5. Elément d'enveloppe de bâtiment selon la revendication 4, **caractérisé en ce que** le clapet forme un élément sensiblement rigide.

6. Elément d'enveloppe de bâtiment selon au moins l'une quelconque des revendications précédentes, **caractérisé en ce que** les moyens d'ouverture et de fermeture présentent des moyens de rappel (30) qui génèrent une force de rappel pour faire pivoter l'élément de vanne (26) depuis la deuxième position en direction de la première position.

7. Elément d'enveloppe de bâtiment selon la revendication 6, **caractérisé en ce que** les moyens de rappel présentent des moyens de ressort (30) qui génèrent une force élastique en tant que force de rappel.

8. Elément d'enveloppe de bâtiment selon la revendication 4 ainsi que selon la revendication 6 ou 7,
**caractérisé en ce que** les moyens de ressort (30) présentent au moins un ressort en spirale, qui est disposé dans la zone de la charnière (28) ou sur la charnière (28).

9. Elément d'enveloppe de bâtiment selon au moins l'une quelconque des revendications 6 à 8, **caractérisé en ce que** la force de rappel est dimensionnée de manière à maintenir l'élément de soupape dans la première position tant que la pression du liquide soumettant l'élément de vanne à une action est inférieure à la valeur de seuil ou est égale au maximum à la valeur de seuil.

10. Elément d'enveloppe de bâtiment selon au moins l'une quelconque des revendications précédentes 1 à 8, **caractérisé en ce que** les moyens d'ouverture et de fermeture présentent un premier élément magnétique (32) pouvant être installé sur et/ou dans la couche de feuille (4 ; 6) et un deuxième élément magnétique (34) prévu sur et/ou dans l'élément de vanne (26), dans lequel les deux éléments magnétiques (32 ; 34) sont réalisés et orientés l'un par rapport à l'autre de telle sorte qu'une force d'attraction agissant sur les deux éléments magnétiques (32 ; 34) est générée.

11. Elément d'enveloppe de bâtiment selon la revendication 10, **caractérisé en ce que** la force d'attraction est dimensionnée pour amener l'élément de vanne (26) dans la première position et pour le maintenir dans la première position lorsque et tant que la pression (40a) du liquide (40) soumettant l'élément de vanne (26) à une action est inférieure à la valeur de seuil ou est égale au maximum à la valeur de seuil.

12. Elément d'enveloppe de bâtiment selon la revendication 10 ou 11, **caractérisé en ce que** la force d'attraction est dimensionnée pour amener l'élément de vanne (26) dans la première position lorsque la distance entre les deux éléments magnétiques (32 ; 34) ne dépasse pas une valeur maximale prédéfinie.

13. Elément d'enveloppe de bâtiment selon la revendication 7 ou 8 ainsi que selon la revendication 12, **caractérisé en ce que** la force de rappel est dimensionnée de manière à contrecarrer sensiblement seulement le poids de l'élément de vanne (26) pour le faire pivoter depuis la deuxième position en direction de la première position.

14. Elément d'enveloppe de bâtiment selon au moins l'une quelconque des revendications 10 à 13, **caractérisé en ce que**
a) le premier élément magnétique (32) présente un matériau magnétique et le deuxième élément magnétique (34) présente un matériau magnétisable, ou
b) le premier élément magnétique (32) présente un matériau magnétisable et le deuxième élément magnétique (34) présente un matériau magnétique ou
c) les deux éléments magnétiques (32 ; 34) présentent un matériau magnétique.

15. Elément d'enveloppe de bâtiment selon au moins l'une quelconque des revendications 10 à 14 ainsi que selon la revendication 2 ou 4, **caractérisé en ce que** le deuxième élément magnétique (34) est prévu sur l'élément de vanne (26) dans la zone de l'autre extrémité (26b) ou de manière adjacente à son autre extrémité (26b).
